(19) Europäisches Patentamt
European Patent Office
Office européen des brevets

(11) EP 4 509 542 A1

(12) EUROPEAN PATENT APPLICATION
published in accordance with Art. 153(4) EPC

(43) Date of publication:
**19.02.2025 Bulletin 2025/08**

(21) Application number: **23886359.1**

(22) Date of filing: **03.11.2023**

(51) International Patent Classification (IPC):
***C08G 63/06*** (2006.01) ***C08G 63/78*** (2006.01)
***C08G 63/87*** (2006.01) ***C08L 67/04*** (2006.01)
***C08G 63/82*** (2006.01)

(52) Cooperative Patent Classification (CPC):
**C08G 63/06; C08G 63/78; C08G 63/82; C08G 63/87; C08L 67/04**

(86) International application number:
**PCT/KR2023/017495**

(87) International publication number:
**WO 2024/096665 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 KR 20220146011**
**04.11.2022 KR 20220146014**
**10.03.2023 KR 20230031735**

(71) Applicant: **LG Chem, Ltd.**
**Yeongdeungpo-gu**
**Seoul 07336 (KR)**

(72) Inventors:
- **LEE, Jungyong**
  **Daejeon 34122 (KR)**
- **NAM, Gibok**
  **Daejeon 34122 (KR)**
- **LEE, Hee Cheon**
  **Daejeon 34122 (KR)**
- **CHOE, Jae Hoon**
  **Daejeon 34122 (KR)**
- **CHOE, Dongcheol**
  **Daejeon 34122 (KR)**
- **JEONG, Dae Youn**
  **Daejeon 34122 (KR)**
- **CHOI, Jong Young**
  **Daejeon 34122 (KR)**
- **KIM, Chul Woong**
  **Daejeon 34122 (KR)**
- **LEE, Yeonju**
  **Daejeon 34122 (KR)**

(74) Representative: **Plasseraud IP**
**104 Rue de Richelieu**
**CS92104**
**75080 Paris Cedex 02 (FR)**

# (54) BRANCHED POLY(3-HYDROXYPROPIONIC ACID) POLYMER

(57) The present invention relates to a branched poly(3-hydroxypropionic acid) polymer that can have biodegradability and a high molecular weight and is advantageous for industrial applications.

EP 4 509 542 A1

## Description

## FIELD OF THE INVENTION

CROSS-REFERENCE TO RELATED APPLICATION(S)

This application claims the benefit of Korean Patent Application No. 10-2022-0146011 filed on November 4, 2022, Korean Patent Application No. 10-2022-0146014 filed on November 4, 2022,Korean Patent Application No. 10-2023-0031735 filed on March 10, 2023 and Korean Patent Application No. 10-2023-0150442 filed on November 3, 2023in the Korean Intellectual Property Office, the disclosures of which are incorporated herein by reference in their entirety.

The present invention relates to a novel branched poly(3-hydroxypropionic acid) polymer.

## BACKGROUND OF THE INVENTION

Poly(3-hydroxypropionic acid), which is a biodegradable polymer, has received attention as an environmentally friendly material having a brittle fracture resistance, and at the same time, having excellent mechanical properties.

Generally, poly(3-hydroxypropionic acid) is prepared by condensation polymerization of the monomer 3-hydroxypropionic acid(3-HP). Also, considering industrial applicability, there is a need to prepare poly(3-hydroxypropionic acid) having excellent thermal stability. However, poly(3-hydroxypropionic acid) contains an ester structure in its chain, wherein the ester structure has a limitation in improving thermal stability because the thermal decomposition temperature is about 220°C.

To improve the thermal stability, it may be considered to prepare poly(3-hydroxypropionate) having a high molecular weight. However, it is not easy to increase the molecular weight of the polymer through condensation polymerization of the monomer 3-hydroxypropionic acid. For example, dehydration may occur during the condensation polymerization process, which may cause problems that while a reactive terminal of the monomer being converted into a vinyl group, the polymerization may be terminated, and/or a low molecular weight cyclic structure is formed during the condensation polymerization process, and the viscosity increases during the condensation polymerization process.

In addition, 3HP polymer has the problem that polymer stability reduces due to its high acid value, making it difficult to form copolymers.

Therefore, there is a need to prepare a polymer that not only has biodegradable characteristics, can be expectably applied industrially and has a high production yield, but also has an appropriate level of acid value.

## SUMMARY OF THE INVENTION

## TECHNICAL PROBLEM

It is an object of the present application to provide a branched poly(3-hydroxypropionic acid) polymer having biodegradability.

It is another object of the present application to provide a branched poly(3-hydroxypropionic acid) polymer having a high molecular weight.

It is another object of the present application to provide a branched poly(3-hydroxypropionic acid) polymer that is advantageous for industrial applications.

It is yet another object of the present application to provide a method for preparing a branched poly(3-hydroxypropionic acid) polymer.

## TECHNICAL SOLUTION

Provided herein is a branched poly(3-hydroxypropionic acid) polymer and a preparation method thereof.

When 3HP is subjected directly to condensation polymerization to prepare a biodegradable P(3HP), it is not easy to increase its molecular weight. This is because the above-mentioned side reactions occur during condensation polymerization. However, since increasing the molecular weight of the polymer is greatly related to industrial applications, a study is required on the matter.

In this regard, the present inventors have confirmed that when a polyfunctional compound described hereinafter is used, it is possible to easily increase the molecular weight, and it is easy to control the molecular weight for industrial applications.

Specifically, the polymer of Chemical Formula 1 described hereinafter can be prepared through an ester reaction between a tetravalent or higher-valent polyfunctional compound and 3-hydroxypropionic acid(3HP), wherein the use of a

tetravalent or higher-valent polyfunctional compound capable of providing sufficient reaction sites can provide sufficient polymerization reaction and molecular weight increase (compared to the use of a trivalent or lower-valent compound).

If the molecular weight of the polymer is insufficient, it is difficult to fully exhibit the physical characteristics of the polymer, and therefore it may be considered that the polymer is mixed with other types of polymers for industrial applications. However, the polymer of Chemical Formula 1 of the present application, which contains units derived from a tetravalent or higher-valent polyfunctional compound, can have a high molecular weight, and therefore can be fully used alone.

Moreover, according to a specific embodiment, as the content between the polyfunctional compound and 3-hydroxypropionic acid that react with each other under predetermined reaction conditions is controlled to a predetermined range, polymers having various grades of molecular weight can be provided, and therefore, the scope of industrial application of the polymer can be further expanded. In addition, because the polymer of the present application has a low acid value, it is high in polymer stability and is also advantageous for forming a copolymer through further reaction with other compounds.

Specific embodiments of the present invention will be described in more detail below.

First, in the present disclosure, the term "substituted or unsubstituted" means being unsubstituted or substituted with one or more substituents selected from the group consisting of deuterium; a halogen group; a nitrile group; a nitro group; a hydroxy group; a carbonyl group; an ester group; an imide group; an amino group; a phosphine oxide group; an alkoxy group; an aryloxy group; an alkylthioxy group; an arylthioxy group; an alkylsulfoxy group; an arylsulfoxy group; a silyl group; a boron group; an alkyl group; a cycloalkyl group; an alkenyl group; an aryl group; an aralkyl group; an aralkenyl group; an alkylaryl group; an alkylamine group; an aralkylamine group; a heteroarylamine group; an arylamine group; an arylphosphine group; or a heterocyclic group containing at least one of N, O and S atoms, or being unsubstituted or substituted with a substituent to which two or more substituents of the above-exemplified substituents are linked. For example, "a substituent in which two or more substituents are linked" may be a biphenyl group. Namely, a biphenyl group may be an aryl group, or it may be interpreted as a substituent in which two phenyl groups are connected.

In the present disclosure, the carbon number of a carbonyl group is not particularly limited, but is preferably 1 to 40. A specific example thereof may be a group having the following structural formulas, but is not limited thereto.

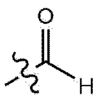 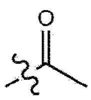 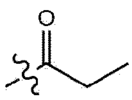 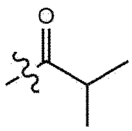

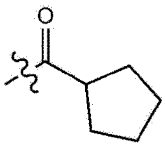 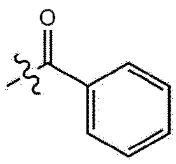 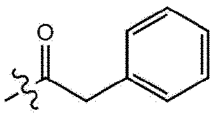

In the present disclosure, an ester group may have a structure in which oxygen of the ester group may be substituted by a straight-chain, branched-chain, or cyclic alkyl group having 1 to 25 carbon atoms, or an aryl group having 6 to 25 carbon atoms. A specific example thereof may be a group having the following structural formulas, but is not limited thereto.

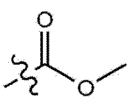 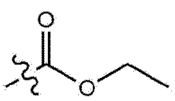 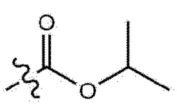 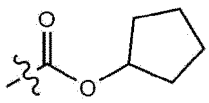 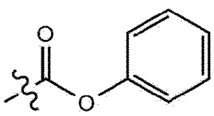

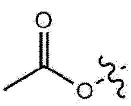 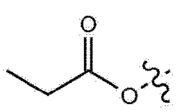 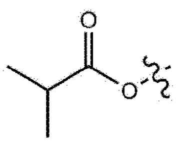 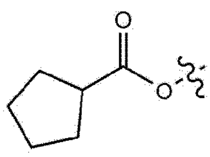 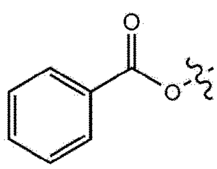

In the present disclosure, the carbon number of an imide group is not particularly limited, but is preferably 1 to 25. A specific example thereof may be a group having the following structural formulas, but is not limited thereto.

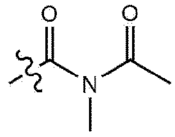 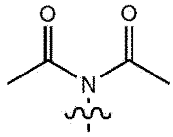 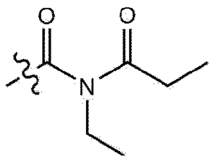

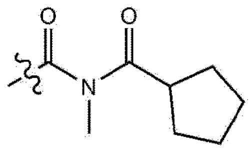 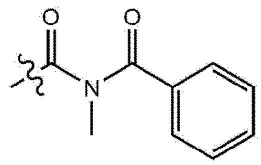

In the present disclosure, a silyl group specifically includes a trimethylsilyl group, a triethylsilyl group, a t-butyldimethylsilyl group, a vinyldimethylsilyl group, a propyldimethylsilyl group, a triphenylsilyl group, a diphenylsilyl group, a phenylsilyl group and the like, but is not limited thereto.

In the present disclosure, a boron group specifically includes a trimethylboron group, a triethylboron group, a t-butyldimethylboron group, a triphenylboron group, and a phenylboron group, but is not limited thereto.

In the present disclosure, examples of a halogen group include fluorine, chlorine, bromine, or iodine.

In the present disclosure, the alkyl group may be straight-chain or branched-chain, and the carbon number thereof is not particularly limited, but is preferably 1 to 40. According to one embodiment, the carbon number of the alkyl group is 1 to 20. According to another embodiment, the carbon number of the alkyl group is 1 to 10. According to yet another embodiment, the carbon number of the alkyl group is 1 to 6. Specific examples of the alkyl group include methyl, ethyl, propyl, n-propyl, isopropyl, butyl, n-butyl, isobutyl, tert-butyl, sec-butyl, 1-methyl-butyl, 1-ethyl-butyl, pentyl, n-pentyl, isopentyl, neopentyl, tert-pentyl, hexyl, n-hexyl, 1-methylpentyl, 2-methylpentyl, 4-methyl-2-pentyl, 3,3-dimethylbutyl, 2-ethylbutyl, heptyl, n-heptyl, 1-methylhexyl, cyclopentylmethyl, cyclohexylmethyl, octyl, n-octyl, tert-octyl, 1-methylheptyl, 2-ethylhexyl, 2-propylpentyl, n-nonyl, 2,2-dimethylheptyl, 1-ethyl-propyl, 1,1-dimethylpropyl, isohexyl, 4-methylhexyl, 5-methylhexyl, and the like, but are not limited thereto.

In the present disclosure, the alkenyl group may be straight-chain or branched-chain, and the carbon number thereof is not particularly limited, but is preferably 2 to 40. According to one embodiment, the carbon number of the alkenyl group is 2 to 20. According to another embodiment, the carbon number of the alkenyl group is 2 to 10. According to still another embodiment, the carbon number of the alkenyl group is 2 to 6. Specific examples thereof include vinyl, 1-propenyl, isopropenyl, 1-butenyl, 2-butenyl, 3-butenyl, 1-pentenyl, 2-pentenyl, 3-pentenyl, 3-methyl-1-butenyl, 1,3-butadienyl, allyl, 1-phenylvinyl-1-yl, 2-phenylvinyl-1-yl, 2,2-diphenylvinyl-1-yl, 2-phenyl-2-(naphthyl-1-yl)vinyl-1-yl, 2,2-bis(diphenyl-1-yl)vinyl-1-yl, a stilbenyl group, a styrenyl group, and the like, but are not limited thereto.

In the present disclosure, a cycloalkyl group is not particularly limited, but the carbon number thereof is preferably 3 to 60. According to one embodiment, the carbon number of the cycloalkyl group is 3 to 30. According to another embodiment, the carbon number of the cycloalkyl group is 3 to 20. According to still another embodiment, the carbon number of the cycloalkyl group is 3 to 6. Specific examples thereof include cyclopropyl, cyclobutyl, cyclopentyl, 3-methylcyclopentyl, 2,3-dimethylcyclopentyl, cyclohexyl, 3-methylcyclohexyl, 4-methylcyclohexyl, 2,3-dimethylcyclohexyl, 3,4,5-trimethylcyclohexyl, 4-tert-butylcyclohexyl, cycloheptyl, cyclooctyl, and the like, but are not limited thereto.

In the present disclosure, an aryl group is not particularly limited, but the carbon number thereof is preferably 6 to 60, and it may be a monocyclic aryl group or a polycyclic aryl group. According to one embodiment, the carbon number of the aryl group is 6 to 30. According to one embodiment, the carbon number of the aryl group is 6 to 20. The aryl group may be a phenyl group, a biphenyl group, a terphenyl group or the like as the monocyclic aryl group, but is not limited thereto. The polycyclic aryl group includes a naphthyl group, an anthracenyl group, a phenanthrenyl group, a pyrenyl group, a perylenyl group, a chrysenyl group, a fluorenyl group, and the like, but is not limited thereto.

In the present disclosure, the fluorenyl group may be substituted, and two substituents may be linked with each other to form a spiro structure. In the case where the fluorenyl group is substituted,

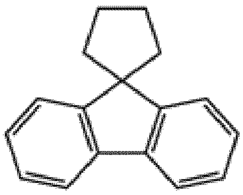 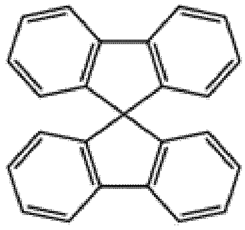 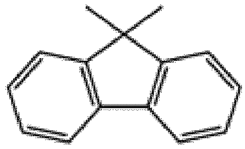 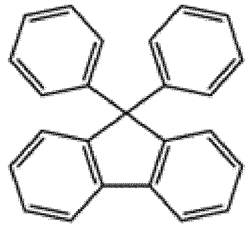

and the like can be formed. However, the structure is not limited thereto.

In the present disclosure, a heteroaryl group is a heterocyclic group containing at least one of O, N, Si and S as a heteroatom and having aromaticity, and the carbon number thereof is not particularly limited, but is preferably 2 to 60. Examples of the heteroaryl group include a thiophene group, a furan group, a pyrrole group, an imidazole group, a thiazole group, an oxazol group, an oxadiazol group, a triazol group, a pyridyl group, a bipyridyl group, a pyrimidyl group, a triazine group, an acridyl group, a pyridazine group, a pyrazinyl group, a quinolinyl group, a quinazoline group, a quinoxalinyl group, a phthalazinyl group, a pyridopyrimidinyl group, a pyridopyrazinyl group, a pyrazinopyrazinyl group, an isoquinoline group, an indole group, a carbazole group, a benzoxazole group, a benzoimidazole group, a benzothiazol group, a benzocarbazole group, a benzothiophene group, a dibenzothiophene group, a benzofuranyl group, a phenanthroline group, a thiazolyl group, an isoxazolyl group, an oxadiazolyl group, a thiadiazolyl group, a benzothiazolyl group, a phenothiazinyl group, a dibenzofuranyl group, and the like, but are not limited thereto.

In the present disclosure, the aryl group in the aralkyl group, the aralkenyl group, the alkylaryl group and the arylamine group is the same as the examples of the aryl group as defined above. In the present disclosure, the alkyl group in the aralkyl group, the alkylaryl group and the alkylamine group is the same as the examples of the alkyl group as defined above. In the present disclosure, the heteroaryl in the heteroarylamine can be applied to the description of the heterocyclic group as defined above. In the present disclosure, the alkenyl group in the aralkenyl group is the same as the examples of the alkenyl group as defined above. In the present disclosure, the description of the aryl group as defined above may be applied except that the arylene is a divalent group. In the present disclosure, the description of the heterocyclic group as defined above can be applied except that the heteroarylene is a divalent group. In the present disclosure, the description of the aryl group or cycloalkyl group as defined above can be applied except that the hydrocarbon ring is not a monovalent group but formed by combining two substituent groups. In the present disclosure, the description of the heterocyclic group as defined above can be applied, except that the heterocycle is not a monovalent group but formed by combining two substituent groups.

Further, in the present disclosure, the polyfunctional compound may be used in admixture with a polyfunctional monomer or a polyfunctional additive. In addition, the polyfunctional compound may mean, for example, a polyol having a tetravalent or higher-valent functional group or a reactive group (e.g., -OH).

According to one embodiment of the invention, there can be provided a branched poly(3-hydroxypropionic acid) polymer represented by the following Chemical Formula 1.

[Chemical Formula 1] $R\text{-}[A\text{-}(B)n\text{-}C]_k$

wherein in Chemical Formula 1,

R is a tetravalent or higher-valent functional group derived from a polyfunctional monomer,

A is a direct bond or a linking group derived from an ether, sulfide, ester, thioester, ketone, sulfoxide, sulfone, sulfonate ester, amine, amide, imine, imide, or urethane,

B is a substituent represented by the following Chemical Formula 2 or Chemical Formula 3,

[Chemical Formula 2]

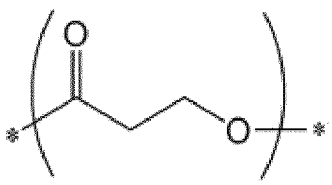

[Chemical Formula 3]

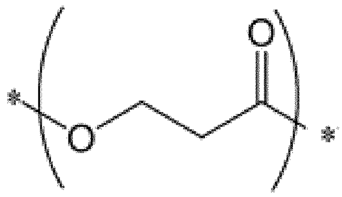

* is a moiety linked to A, k is an integer of 3 or more, n is an integer of 1 to 700, and
C is a substituent represented by the following Chemical Formula 4 or Chemical Formula 5.

[Chemical Formula 4]

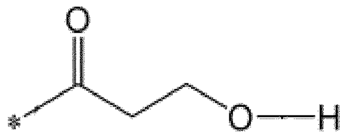

[Chemical Formula 5]

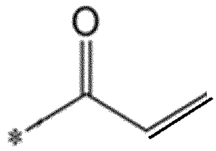

At this time, the branched is a polymer of monomers each having at least three or at least four functional groups, and the R moiety in Chemical Formula 1 is defined as a branched structure.

For example, the branched structure may mean a structure of

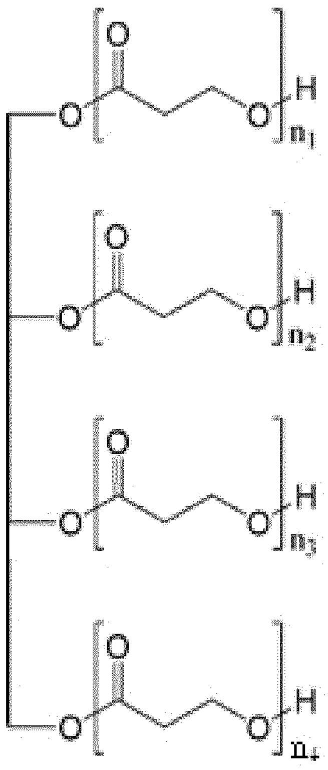

, or the like, but is not limited thereto. In each branched unit, n may independently have any integer value of 1 to 700.

In one embodiment, k in Chemical Formula 1 may be an integer of 4 or more, 5 or more, 6 or more, 7 or more, or 8 or more. Although not particularly limited, k in Chemical Formula 1 may be 20 or less, 18 or less, 16 or less, 14 or less, 12 or less, 10 or less, 8 or less, or 6 or less.

In one embodiment, the R may be a tetravalent or higher-valent linking group derived from a substituted or unsubstituted C1-60 alkyl, a substituted or unsubstituted C3-60 cycloalkyl, a substituted or unsubstituted C6-60 aryl or a substituted or unsubstituted C2-60 heteroaryl containing at least one of N, O and S. At this time, at least one of the carbon atoms of the alkyl, cycloalkyl, aryl and heteroaryl may be substituted or unsubstituted with at least one heteroatom selected from the group consisting of N, O, and S or carbonyl.

In additional, the branched poly(3-hydroxypropionic acid) polymer satisfies an acid value of 150 meq/kg or less. Specifically, the acid value of the branched polymer may be, for example, 140 meq/kg or less, 135 meq/kg or less, 130 meq/kg or less, 125 meq/kg or less, 120 meq/kg or less, 115 meq/kg or less, 110 meq/kg or less, 105 meq/kg or less, 100 meq/kg or less, 95 meq/kg or less, 90 meq/kg or less, 85 meq/kg or less, 80 meq/kg or less, 75 meq/kg or less, 70 meq/kg or less, 65 meq/kg or less, 60 meq/kg or less, 55 meq/kg or less, 50 meq/kg or less, 45 meq/kg or less, 40 meq/kg or less, 35 meq/kg or less, or 30 meq/kg or less. Within the above acid value range, the branched polymer can have a stable state, and is more advantageous for forming a copolymer through reaction with other compounds. Therefore, the branched polymer of the present application can enable the expansion of the industrial application range. The acid value of the branched polymer can be measured by titrating a 0.02N potassium methoxide solution with a titration solution, as in the Experiments described below.

Meanwhile, the present inventors have also confirmed through experiments that when a polyhydric alcohol having four or more hydroxy groups is used as a reaction additive and reacted with poly(3-hydroxypropionic acid), which is a bio-derived monomer, to form a novel branched poly(3-hydroxypropionic acid) polymer, vinyl groups are formed at each branched chain terminal of poly(3-hydroxypropionic acid) polymer, thereby being able to prepare a polymer having various molecular weights, various thermal characteristics, and excellent acrylic structures.

In particular, a certain amount of vinyl groups is introduced into the chain terminal in the novel branched structure, so that the molecular weight and particle structure of the acrylic polymer can be diversified. Therefore, the branched poly(3-hydroxypropionic acid) polymer represented by Chemical Formula 1 having a novel structure may be an acrylic polymer having a vinyl group at the branched chain terminal.

In addition, as the acrylic polymer is provided using the tetravalent or higher-valent polyfunctional monomer, chain formation can be further increased and the number of vinyl groups at the branched terminals can be increased compared to the case of using a polyfunctional monomer with a valence of less than 4. Thereby, the acrylic polymer can reduce or alleviate brittleness compared to a conventional acrylic polymer having a similar molecular weight, and can also

lower Tg and Tm.

Specifically, the acrylic polymer is a derivative of "$CH_2$=CHCOOR" and has various applications such as fibers and adhesives.

In addition, according to the existing prior art, when poly(3-hydroxypropionic acid) polymer, which is a biodegradable polymer, P3HP, is provided, P3HP whose chain terminal is a hydroxyl group is polymerized from poly(3-hydroxypropionic acid), which makes it possible to initiate polymerization with 3HP or other monomers, or focuses only on the aspect of changing physical characteristics. Therefore, the poly(3-hydroxypropionic acid) polymer has a limited structure and molecular weight, and there is a limitation in realizing various physical characteristics (e.g., thermal characteristics).

In order to improve the usability of the acrylic polymer and impart various physical characteristics to the poly(3-hydroxypropionic acid) polymer, by introducing poly(3-hydroxypropionic acid), which is a bio-derived, environmentally friendly monomer and by using a tetravalent or higher-valent polyhydric alcohol as a polyfunctional monomer for the vinylation of the polymer chain terminal for forming an acrylic structure, it is possible to prepare an acrylic polymer having various molecular weights from low molecular weight to high molecular weight.

Further, the prepared acrylic polymer may be a branched poly(3-hydroxypropionic acid) polymer having four or more branched structures from a linear structure by using a tetravalent or higher-valent polyhydric alcohol as a polyfunctional monomer. That is, introducing a tetrahydric or higher-valent polyhydric alcohol in the polyfunctional monomer can facilitate vinylation of the chain terminals of the branched poly(3-hydroxypropionic acid) polymer. Therefore, the polymer can be easily prepared into various structures ranging from linear to hyperbranched structures, thereby expanding the field of application of acrylic polymers.

Further, for the branched poly(3-hydroxypropionic acid) polymer, a hydroxyl group at the polymer chain terminal may be further vinylated depending on the acid catalyst addition and heat treatment conditions, and thereby adjust the formation of vinyl groups at each branched chain terminal to prepare an acrylic polymer compound having various contents.

Further, the branched poly(3-hydroxypropionic acid) polymer is an environmentally friendly, biodegradable polymer, and may have mutually different thermal characteristics (Tg, Tm) due to its various polymer structures.

Therefore, the branched poly(3-hydroxypropionic acid) polymer having various acrylic polymer structures can be utilized in multiple ways such as radical polymerization monomers and elastomers.

In accordance with this configuration, there can be provided an acrylic polymer in which the molecular weight and particle structure of the branched poly(3-hydroxypropionic acid) polymer are diversified by using a tetravalent or higher-valent polyhydric alcohol.

Further, the weight average molecular weight of the branched poly(3-hydroxypropionic acid) polymer may be adjusted, for example, to have a weight average molecular weight of 1,000 to 100,000, or have a weight average molecular weight not lower than that.

Further, the branched poly(3-hydroxypropionic acid) polymer includes an acrylic polymer having one or more, preferably three to four or more polymer molecular chains, wherein a portion of the terminal of the branched chain is formed of a vinyl group.

Specifically, in the branched poly(3-hydroxypropionic acid) polymer, the ratio of the number of Chemical Formula 5 to the total sum of Chemical Formula 4 and Chemical Formula 5, that is, the branched terminal vinyl group content, may be 5% by weight or more, 10% by weight or more, 20% by weight or more, 30% by weight or more, 40% by weight or more, 42% by weight or more, 45% by weight or more, 50% by weight or more, 52% by weight or more, 55% by weight or more, 100% by weight or less, 95% by weight or less, 90% by weight or less, 80% by weight or less, 75% by weight or less, 72% by weight or less, 70% by weight or less, 65% by weight or less, 60% by weight or less, or 56% by weight or less.

Further, the ratio of the number of Chemical Formula 5 to the total sum of Chemical Formula 4 and Chemical Formula 5 (branched terminal vinyl group content) may be the content in an unpurified or purified branched poly(3-hydroxypropionic acid) polymer.

When the branched poly(3-hydroxypropionic acid) polymer is purified, the branched terminal vinyl group content of the polymer prepared under the same conditions may be further increased. According to a preferred embodiment of the invention, in the case of a purified branched poly(3-hydroxypropionic acid) polymer prepared under the same conditions, the ratio of the number of Chemical Formula 5 to the total sum of Chemical Formula 4 and Chemical Formula 5 may be 55% by weight or more and 100% by weight or less.

At this time, if the vinyl group content of Chemical Formula 5 at the branched terminal of the polymer is less than 5%, the chain terminal, which is not an acrylic polymer, exhibits characteristics similar to poly(3-hydroxypropionic acid) polymer capable of initiating polymerization with 3HP or other monomers, which may make it difficult to achieve the desired expected effect.

Meanwhile, the ratio of the number of Chemical Formula 5 to the total sum of Chemical Formula 4 and Chemical Formula 5 (branched terminal vinyl group content) can be obtained by measuring the vinyl group structure at the chain terminal of the polymer using 1H-NMR.

Specifically, the C-H peak value (①) of the vinyl group of Chemical Formula 5 at the branched terminal of each polymer and the terminal beta C-H peak value (②) of Chemical Formula 4 were measured using 1H-NMR, and the vinyl group content at the branched terminal can be calculated according to the following Equation 1

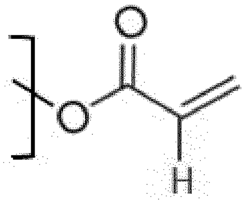

① Vinyl C-H (peak 6.38)

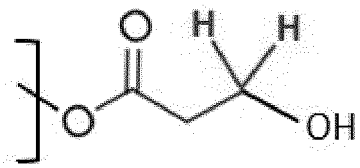

② Terminal Beta C-H (peak 3.86)

[Equation 1]

$$\text{Branched Terminal Vinyl Content (\%)} = \frac{①}{① + \frac{②}{2}} \times 100$$

wherein in Equation 1, ① is the C-H peak value of the vinyl group of Chemical Formula 5 at the branched terminal of the branched poly(3-hydroxypropionic acid) polymer, and ② is the terminal beta C-H peak value of Chemical Formula 4 at the branched terminal of the branched poly(3-hydroxypropionic acid) polymer.

At this time, in Chemical Formula 4 or 5, * may be a moiety linked to B.

The polymer is formed by condensation polymerization of 3-hydroxypropionic acid and a polyfunctional monomer, wherein the polyfunctional monomer is a tetravalent or higher-valent polyhydric alcohol.

As mentioned above, the branched polymer may be formed by condensation polymerization of 3-hydroxypropionic acid and a polyfunctional compound. The type of polyfunctional compound that can be used to prepare the branched polymer is not particularly limited, but for example, the polyfunctional compound may include one or more selected from the group consisting of pentaerythritol, 4-arm-poly(ethyleneglycol)n=2~10, di(trimethylolpropane), di(pentaerythritol), tri(pentaerythritol)), xylitol, sorbitol, inositol, cholic acid, β-cyclodextrin, tetrahydroxyperylene, pyridine-tetraamine(PTA), diethylenetriaminepentaacetic acid and tetraacetylene pentamine.

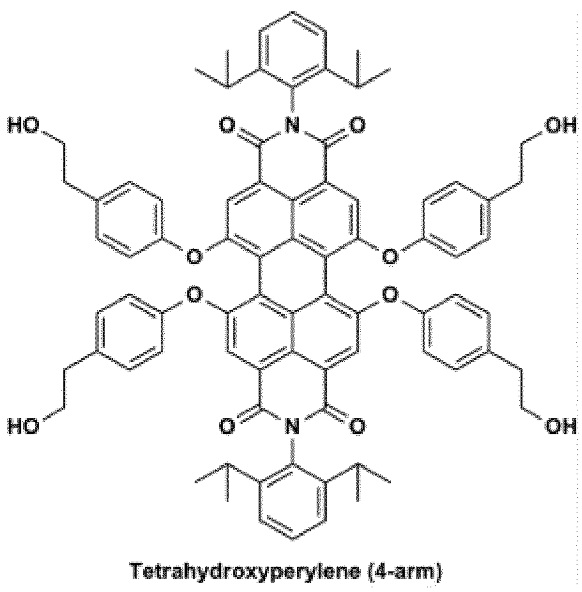

Tetrahydroxyperylene (4-arm)

As mentioned above, the branched polymer includes 3-hydroxypropionic acid; and units derived from 0.05 to 50 parts by weight of the polyfunctional compound relative to 100 parts by weight of the 3-hydroxypropionic acid. For example, the polymer may include the polyfunctional compound in an amount of 0.1 part by weight or more, 1 part by weight or more, 5 parts by weight or more, 10 parts by weight or more, 15 parts by weight or more, 20 parts by weight or more, 25 parts by weight or more, 30 parts by weight or more, 35 parts by weight or more, 40 parts by weight or more or 45 parts by weight or more (relative to 100 parts by weight of 3-hydroxypropionic acid). The branched polymer may include the polyfunctional compound in an amount of 45 parts by weight or less, 40 parts by weight or less, 35 parts by weight or less, 30 parts by weight or less, 25 parts by weight or less, 20 parts by weight or less, 15 parts by weight or less, 10 parts by weight or less, 5 parts by weight or less, 1 parts by weight or less, or 0.5 parts by weight or less (relative to 100 parts by weight of 3-hydroxypropionic acid). Within the above content range, a branched polymer capable of achieving the desired objective can be prepared. As confirmed in the Experiments described hereinafter, a branched polymer having a high molecular weight can be obtained even when a small amount of the polyfunctional compound is used.

In one embodiment, the branched polymer may be a polymer in which 0.005 mol% or more of the polyfunctional compound based on the content of 3-hydroxypropionic acid is subjected to a condensation polymerization. When the branched polymer of the present application is prepared, the above-mentioned polyfunctional compound plays a role similar to that of an initiator and therefore, it can sufficiently perform its function even in a small amount.

Specifically, based on the content of 3-hydroxypropionic acid, 0.01 mol% or more, 0.1 mol% or more, 0.5 mol% or more, 1 mol% or more, 5 mol% or more or 10 mol% or more of the polyfunctional compound may be used to polymerize the branched polymer. Although not particularly limited, the upper limit thereof may be, for example, 25 mol % or less, 20 mol % or less, specifically, 15 mol % or less, 14.5 mol % or less, 14.0 mol % or less, 13.5 mol % or less, 13.0 mol % or less, 12.5 mol % or less, 12.0 mol % or less, 11.5 mol % or less, 11.0 mol % or less, 10.5 mol % or less, 10 mol% or less, 9.5 mol% or less, 9 mol% or less, 8.5 mol% or less, 8 mol% or less, 7.5 mol% or less, 7 mol% or less, 6.5 mol % or less, 6 mol % or less, 5.5 mol % or less, or 5.0 mol % or less. Within the above content range, a branched polymer capable of achieving the desired objective can be prepared.

In one embodiment, the branched polymer may have a weight average molecular weight(Mw) in the range of 1,000 to 300,000. Specifically, the weight average molecular weight(Mw) of the polymer may be, for example, 2,000 or more, 3,000 or more, 4,000 or more, 5,000 or more, 6,000 or more, 7,000 or more, 8,000 or more, 9,000 or more, 10,000 or more, 15,000 or more, 20,000 or more, 25,000 or more, 30,000 or more, 35,000 or more, 40,000 or more, 45,000 or more, 50,000 or more, 55,000 or more, 60,000 or more, 65,000 or more, 70,000 or more, 75,000 or more, 80,000 or more, 85,000 or more, 90,000 or more or 100,000 or more. And, the upper limit thereof may be, for example, 250,000 or less, 200,000 or less, 150,000 or less, 100,000 or less, 50,000 or less, 45,000 or less, 40,000 or less, 35,000 or less, 30,000 or less, 25,000 or less, 20,000 or less, 15,000 or less, or 10,000 or less. In this way, according to an embodiment of the present application, the content and/or reaction conditions of reaction components (e.g. 3-hydroxypropionic acid and polyfunctional compound) are controlled during the preparation of a branched polymer, so that the branched polymer can have various grades of molecular weight characteristics.

In one embodiment, the branched polymer may have a number average molecular weight (Mn) in the range of 500 to 100,000. Specifically, the number average molecular weight (Mn) of the polymer may be, for example, 1,000 or more, 2,000 or more, 3,000 or more, 4,000 or more, 5,000 or more, 6,000 or more, 7,000 or more, 8,000 or more, 9,000 or more, 10,000 or more, 15,000 or more, 20,000 or more, 25,000 or more, 30,000 or more, 35,000 or more, 40,000 or more, 45,000 or more, 50,000 or more, 55,000 or more, 60,000 or more, 65,000 or more, 70,000 or more, 80,000 or more, 85,000 or more, 90,000 or more, or 95,000 or more. And, the upper limit thereof may be, for example, 95,000 or less, 90,000 or less, 85,000 or less, 80,000 or less, 75,000 or less, 70,000 or less, 65,000 or less, 60,000 or less, 55,000 or less, 50,000 or less, 45,000 or less, 40,000 or less, 35,000 or less, 30,000 or less, 25,000 or less, 20,000 or less, 15,000 or less, or 10,000 or less. In this way, according to an embodiment of the present application, the content and/or reaction conditions of reaction components (e.g. 3-hydroxypropionic acid and polyfunctional compound) are controlled during the preparation of a branched polymer, so that the branched polymer can have various grades of molecular weight characteristics.

In one embodiment, the branched polymer may have a polydispersity index (PDI) in the range of 1.0 to 13.0. Specifically, the polydispersity index (PDI) of the polymer may be, for example, 1.5 or more, 2.0 or more, 2.5 or more, 3.0 or more, 3.5 or more, 4.0 or more, 4.5 or more, or 5.0 or more. And, the upper limit thereof may be, for example, 12.0 or less, 11.5 or less, 11.0 or less, 10.5 or less, 10.0 or less, 9.5 or less, 9.0 or less, 8.5 or less, 8.0 or less, 7.5 or less, 6.5 or less, 6.0 or less, 5.5 or less, or 5.0 or less. In this way, according to an embodiment of the present application, the content and/or reaction conditions of reaction components (e.g. 3-hydroxypropionic acid and polyfunctional compound) are controlled during the preparation of a branched polymer, so that the branched polymer can have various grades of molecular weight characteristics.

Methods for measuring the weight average molecular weight, number average molecular weight, and polydispersity index are explained in connection with the Experiments described hereinafter.

According to other embodiments of the invention, there can be provided a method for preparing the branched poly(3-hydroxypropionic acid) polymer.

Specifically, the method includes a step of polymerizing 3-hydroxypropionic acid with a tetravalent or higher-valent polyfunctional compound to prepare a branched poly(3-hydroxypropionic acid) polymer represented by the Chemical Formula 1.

The branched poly(3-hydroxypropionic acid) polymer may satisfy an acid value of 150 meq/kg or less.

The structure of the polymer provided by the method of the above specific embodiments is the same as that of the branched poly(3-hydroxypropionic acid) polymer described above, and the specific types, contents, characteristics, etc. of the monomers or compounds that form the polymer are the same as those described above, and therefore a detailed description thereof will be omitted.

In one embodiment, the polymerization may be carried out in the presence of a catalyst. It is advantageous in promoting the polymerization reaction during use of a catalyst and suppressing the production of a cyclic oligomer during the polymerization process. The type of catalyst is not particularly limited, as long as it does not impede the progress of the polymerization reaction or the achievement of the technical subject of the present application. The usable catalyst may be, for example, an acid catalyst or a tin-based catalyst. The acid catalyst may be, for example, a sulfonic acid catalyst or may include the same. Examples of the sulfonic acid-based catalyst include p-toluenesulfonic acid, m-xylene-4-sulfonic acid, 2-mesitylenesulfonic acid, and/or p-xylene-2-sulfonic acid. Additionally, for example, $SnCl_2$ or $Sn(oct)_2$ may be used as a tin-based catalyst.

The catalyst may be used in a predetermined content range. For example, the polymerization may be carried out using the catalyst in an amount of 0.001 to 1.0 mol% relative to the 3-hydroxypropionic acid. Specifically, the content of the catalyst may be 0.01 mol% or more, 0.05 mol% or more, or 0.1 mol% or more, and the upper limit thereof may be, for example, 0.9 mol% or less, 0.8 mol% or less, 0.7 mol% or less, 0.6 mol% or less, or 0.5 mol% or less. When a catalyst is used within the above-mentioned content range, it may be more advantageous in promoting polymerization and simultaneously suppressing the production of a cyclic oligomer.

In one embodiment, the polymerization may be carried out in a vacuum state. At this time, the vacuum state means a pressure state lower than atmospheric pressure, and for example, it may mean a pressure state of 500 torr or less. Although not particularly limited, the polymerization may be carried out under a pressure of 100 torr or less, 50 torr or less, 10 torr or less, 1 torr or less, or 0.1 torr or less.

In one embodiment, the polymerization may be carried out in a temperature range of 50 to 150°C. Specifically, the polymerization may be carried out at a temperature of 60°C or more, 70°C or more, 80°C or more, 90°C or more, or 100°C or more, and 140°C or less, 130°C or less, 120°C or less, 110°C or less, or 100°C or less. At this time, the polymerization reaction temperature may be selected in a temperature range in which side reactions can be suppressed and sufficient yield can be secured.

In one embodiment, the polymerization may be carried out for 1 to 70 hours. Specifically, the polymerization, which is carried out in the above-mentioned vacuum state and temperature range, may be carried out for 2 hours or more, 3 hours or more, 4 hours or more, or 5 hours or more, and 60 hours or less, 55 hours or less, 50 hours or less, 45 hours or less, 40 hours or less, 35 hours or less, 30 hours or less, 25 hours or less, 20 hours or less, 15 hours or less, 10 hours or less, or 5 hours or less. At this time, the polymerization can be carried out for a period of time during which side reactions can be suppressed and sufficient yield can be secured.

In one embodiment, the method may further include a catalyst removal or crystallization process step carried out after the polymerization reaction described above. For example, the step may be carried out by mixing the branched polymer with an organic solvent, and creating temperature conditions of 150°C or less, 140°C or less, 130°C or less, 120°C or less, 110°C or less, or 100°C or less, and 30°C or more or 40°C or more. Thereby, the branched polymer is crystallized and the catalyst is removed. The type of organic solvent used is not particularly limited, and any known solvent can be used.

In one embodiment, the method may further include an oligomerization reaction step carried out before the polymerization reaction described above. Specifically, the method may further include an oligomerization step carried out at 50 to 100°C and in a vacuum state (e.g., 100 torr or less, 50 torr or less, 10 torr or less). By going through the oligomerization step, the occurrence of side reactions can be suppressed. The time for which such an oligomerization reaction is carried out is not particularly limited, but may be, for example, 300 minutes or less, 250 minutes or less, 200 minutes or less, 150 minutes or less, or 100 minutes or less, and 30 minutes or more or 60 minutes or more.

In one embodiment, the method may further include a step of drying one or more of the 3-hydroxypropionic acid and the polyfunctional compound before the polymerization or before the oligomerization reaction step. This drying takes into consideration the case where the reactive components (3-hydroxypropionic acid and/or polyfunctional compound) are mixed in an aqueous solution. The dying conditions are not particularly limited, but for example, the drying may be carried out at 30 to 100°C and in a vacuum state (about 50 to 300 torr) for a predetermined time, for example, 5 hours or less, 4 hours or less, 3 hours or less, 2 hours or less, or 1 hour or less.

Meanwhile, according to another embodiment of the invention, there can be provided a method for preparing a branched poly(3-hydroxypropionic acid) polymer represented by the Chemical Formula 1, the method comprising: a step of polymerizing 3-hydroxypropionic acid with a tetravalent or higher-valent polyfunctional monomer to prepare an acrylic

primary polymer, and a step of heat-treating the acrylic primary polymer to prepare an acrylic secondary polymer.

The step of preparing the acrylic primary polymer is a step of preparing poly(3-hydroxypropionic acid)(P3HP) through primary condensation polymerization of 3-hydroxypropionic acid with a polyfunctional monomer having a tetravalent or higher-valent hydroxy group.

The polyfunctional monomer may be used in an amount of 0.1 mol% to 25 mol% relative to the content of 3-hydroxypropionic acid. When the content of the polyfunctional monomer is 25 mol%, the number of hydroxy groups in the tetravalent polyhydric alcohol may be equal to the number in 3-hydroxypropionic acid which is a raw material.

Therefore, when polymerization is carried out within the above content range, it is suitable for forming the desired branched acrylic primary polymer structure as an appropriate crosslinking structure in an excellent yield. When the content of the polyfunctional monomer is less than 0.1 mol%, the amount of poly(3-hydroxypropionic acid) of a linear structure formed from the condensation polymerization of only 3-hydroxypropionic acid, rather than a branched structure formed from the reaction of a polyfunctional monomer with 3-hydroxypropionic acid, increases, which may not comply with the purpose of the present invention.

Further, when the content of the polyfunctional monomer exceeds 25 mol%, side reactions proceed due to excessive addition, which makes it difficult to obtain acrylic polymers having various molecular weights, and the reaction time becomes longer, which causes a problem that the process efficiency is reduced.

Preferably, the content of the polyfunctional monomer may be 0.1 mol% to 20 mol%, 0.1mol% to 15mol%, 0.1mol% to 10mol%, 0.1mol% to 5mol%, 0.1mol% to 1mol% or less, or 0.1mol% to 0.5mol% or less, or 0.1mol% or more, 0.5mol% or more, or 1.0mol% or more, or 20mol% or less, 15mol% or less, 10mol% or less, 5mol% or less, 1mol% or less, or 0.5 mol% or less, relative to the content of 3-hydroxypropionic acid. In this case, the polymer can be formed without the above problems.

The polymerization can be carried out under an acid catalyst at 50°C to 100°C and 5 torr or less for 10 hours or more.

Preferably, the polymerization may be carried out through a condensation reaction at 50°C to 100°C and 0.1 torr to 5 torr or less under an acid catalyst for 10 to 50 hours to prepare an acrylic primary polymer. The polymerization reaction time may be 10 hours or more, 15 hours or more, 20 hours or more, 25 hours or more, or 50 hours or less, 45 hours or less, 40 hours or less, 35 hours or less.

When melt polymerization is carried out under the above conditions, the generation of products of side reaction during the production of the acrylic primary polymer can be suppressed.

For reference, the reaction after oligomerization can be appropriately adjusted depending on the content range of the polyfunctional monomer used. If an excessive amount of polyfunctional monomer is used, the reaction time becomes longer, and chain transfer may occur as a side reaction and gelation may occur. The reaction time can be appropriately adjusted within about 24 hours.

Further, the acid catalyst may be a sulfonic acid-based catalyst. The catalyst has the effect of promoting the polymerization of 3-hydroxypropionic acid and simultaneously suppressing the formation of cyclic oligomers during the polymerization process.

According to one specific embodiment of the invention, the sulfonic acid-based catalyst may be p-toluenesulfonic acid, m-xylene-4-sulfonic acid, 2-mesitylenesulfonic acid, or p-xylene-2-sulfonic acid.

Preferably, the acid catalyst is used in an amount of 0.01 mol% to 1 mol% relative to the content of 3-hydroxypropionic acid, and may be appropriately added in an amount of 0.1 to 0.3 mol% equivalent.

If the acid catalyst content is less than 0.01 mol% which is a very small amount, the reaction progresses slowly, and if the content is greater than 1 mol% and the catalyst is added excessively, side reactions may proceed. The amount of catalyst added may vary depending on the type of catalyst, and the content of the acid catalyst may be based on a sulfonic acid-based catalyst.

Therefore, by using an acid catalyst in the above range, polymerization can be promoted to produce an acrylic polymer containing a vinyl group at the terminals of branched chains having various molecular weights and thermal characteristics. Preferably, the content of the sulfonic acid-based catalyst may be 0.01 mol% to 0.8 mol%, 0.02 mol% to 0.5 mol%, or 0.1 mol% to 0.3 mol%, or 0.01 mol% or more, or 0.02 mol% or more, or 0.1 mol% or more, 0.8 mol% or less, or 0.5 mol % or less, or 0.3 mol% or less.

The heat treatment is a step of further performing a secondary polymerization reaction of the acrylic primary polymer under high temperature conditions to further form vinyl groups at the chain terminals of the acrylic primary polymer, thereby preparing an acrylic secondary polymer having various structures and molecular weights. Through the above steps, the branched poly(3-hydroxypropionic acid) polymer represented by Chemical Formula 1 can be provided.

Preferably, the heat treatment may be carried out at 100°C to 200°C with or without stirring for 1 hour to 20 hours. The heat treatment time may be 1 hour or more, 2 hours or more, 3 hours or more, 4 hours or more, 20 hours or less, 15 hours or less, 10 hours or less, and 5 hours or less.

If the heat treatment temperature is less than 100°C, condensation polymerization with 3-hydroxypropionic acid used as a raw material is more dominant than the formation of a vinyl group at the chain terminal of the acrylic primary

polymer, and thus, an acrylic structure is not formed. Further, when the heat treatment temperature is greater than 200°C, decomposition of the 3-hydroxypropionic acid occurs due to an excessive temperature, which causes a problem that side reactions increase. Further, if the heat treatment time is less than 1 hour, there is a problem that it may be difficult to measure the formation of a vinyl group at the chain terminal of the primary polymer, and a heat treatment time of 20 hours or more may cause problems that the vinyl group formation reaction at the chain terminal of the polymer is saturated and thus ineffective.

Further, the heat treatment may be carried out under an inert atmosphere at a pressure of 0.1 to 760 torr or at normal pressure. Nitrogen, argon, etc. may be used to create the inert atmosphere.

Further, the heat treatment may be carried out in the presence of an acid catalyst. The catalyst can be used under the same conditions as in the preparation step of the acrylic primary polymer to promote further polymerization of the acrylic primary polymer, thereby preparing an acrylic secondary polymer having a desired molecular weight and structure.

Meanwhile, the method may further include a step of dissolving the heat-treated acrylic secondary polymer in an organic solvent and then purifying the polymer by addition of a non-solvent.

Through the purification, impurities in the polymer can be removed to improve purity.

The organic solvent may be used in an amount of 500 to 2,000 parts by weight based on 100 parts by weight of the heat-treated acrylic secondary polymer. If the content of the organic solvent is less than 500 parts by weight, there is a problem that the weight of the acrylic secondary polymer exceeds the solubility of the solvent and the polymer may not be dissolved. If the content of the organic solvent is greater than 2,000 parts by weight, there is a problem that crystallinity may decrease when the non-solvent is added.

The organic solvent may be a hydrocarbon-based organic solvent such as chloroform, ethyl ether, n-hexane, and toluene.

The non-solvent may be added in an amount of 10 to 500 parts by weight based on 100 parts by weight of the organic solvent. If the content of the non-solvent is less than 10 parts by weight, there is a problem that the crystallinity of the polymer to be purified is lowered, and if the content of the non-solvent exceeds 500 parts by weight, there is a problem that the purity of the polymer may be lowered.

The non-solvent may be ethanol, water, methanol, isopropanol, etc.

The purifying step may be carried out under temperature conditions of -10°C to 100°C. If the purification temperature is less than -10°C, there is a problem that the solubility of the solvent in the polymer is reduced and may not be dissolved, and if the purification temperature exceeds 100°C, there may be a problem that the temperature is higher than the boiling point of the solvent and non-solvent.

In addition, in the purification step, the precipitated acrylic secondary polymer is filtered and then dried at room temperature and under vacuum conditions, so that the purified branched poly(3-hydroxypropionic acid) polymer can be provided in particle form.

The filtration and drying method is not limited, and any method well known in the art can be used.

In addition, if necessary, the method may further include a step of pretreating the 3-hydroxypropionic acid and the polyfunctional monomer, each independently, at 50°C to 100°C and 100 torr or less prior to polymerization. Through the pretreatment step, moisture present in 3-hydroxypropionic acid and polyfunctional monomers can be removed.

Preferably, the method may further include a step of pretreating the 3-hydroxypropionic acid at 50°C to 100°C, and 100 torr or less, or 60 to 100 torr for 1 to 2 hours prior to polymerization.

According to yet another embodiment of the invention, there can be provided an article comprising the branched poly(3-hydroxypropionic acid) polymer.

For example, the branched polymer may be used alone or in admixture with other polymer components to form all or part of a desired application article. Such articles may include, for example, packaging materials, films, non-woven fabrics, and/or injection molded products.

As mentioned above, the present application is capable of providing a branched polymer having a high molecular weight, which can be used alone to form the above-mentioned article. In addition, according to the present application, polymers having various grades of molecular weight can be provided, thereby broadening the scope of industrial application of articles containing the branched polymer.

## ADVANTAGEOUS EFFECTS

The present invention can provide a branched poly(3-hydroxypropionic acid) polymer that can have biodegradability and a high molecular weight and is advantageous for industrial applications.

## DETAILED DESCRIPTION OF THE EMBODIMENTS

Hereinafter, the present invention will be described in more detail with reference to Examples. However, the following Examples are for illustrative purposes only, and the scope of the invention is not intended to be limited by the

Examples.

**<Examples 1 to 5: Preparation of branched copolymer>**

**Example 1**

3-Hydroxypropionic acid(3HP) and pentaerythritol dissolved in water were added to RBF, and moisture was dried at 90°C and 100 torr for 2 hours.

70 g of dried 3-hydroxypropionic acid(3HP) and 0.154 g of pentaerythritol were placed in a reactor, and subjected to condensation polymerization reaction using 295.6 mg (0.2 mol% relative to 3HP) of p-TSA as a catalyst at 90°C and under a vacuum of 1 torr for 30 hours to prepare a branched copolymer.

**Example 2**

A branched copolymer was prepared in the same manner as in Example 1, except that dipentaerythritol was used instead of pentaerythritol.

**Example 3**

A branched copolymer was prepared in the same manner as in Example 1, except that di(trimethylolpropane) was used instead of pentaerythritol.

**Example 4**

A branched copolymer was prepared in the same manner as in Example 1, except that tripentaerythritol was used instead of pentaerythritol.

**Example 5**

A branched copolymer was prepared in the same manner as in Example 1, except that sorbitol was used instead of pentaerythritol.

**<Comparative Examples 1 to 3>**

**Comparative Example 1**

3-Hydroxypropionic acid(3HP) dissolved in water was added to RBF, and moisture was dried at 90°C and 100 torr for 2 hours.

60 g of dried 3-hydroxypropionic acid(3HP) was placed in a reactor, and subjected to condensation polymerization reaction using 295.6 mg of p-TSA as a catalyst at 80°C and under a vacuum of 1 torr for 20 hours to prepare a linear copolymer.

**Comparative Example 2**

A copolymer was prepared in the same manner as in Comparative Example 1, except that the total polymerization time, including the oligomerization reaction, was carried out for 25 hours.

**Comparative Example 3**

Pentaerythritol (7.7g), SnO (tin oxide(II), 1.0g) and lactic acid (300g) were added to RBF, and reacted at 150°C and 30mbar for 15 hours to polymerize the copolymer.

As a result of NMR analysis of the obtained copolymer, it was confirmed that no peaks were detected between 5.5 and 7.0 ppm, and terminal vinyl groups were not substantially contained.

**<Experimental Example 1>**

The characteristics of the branched polymers prepared in Examples 1 to 5 and Comparative Examples 1 to 3 were evaluated as follows.

**(1) Evaluation of molecular weight by GPC (gel permeation chromatography)**

For the copolymers of respective steps prepared in the Examples and Comparative Examples, the molecular weight was evaluated using a Water e2695 model instrument and Agilent Plgel Mixed-C and B Columns. The sample was prepared at 4 mg/ml with chloroform as a solvent, and 20 ul was injected. The weight average molecular weight, number average molecular weight, and polydispersity index were measured by gel permeation chromatography (GPC, Tosoh ECO SEC Elite). The results are shown in Table 1 below.

Solvent: chloroform (eluent)

Flow rate: 1.0 ml/min

Column temperature: 40°C

Standard: Polystyrene (corrected with a cubic function)

**(2) Vinyl group content at branched terminals**

The C-H peak value(①) of the vinyl group of Chemical Formula 5 at the branched terminal of each polymer and the terminal beta C-H peak value(②) of Chemical Formula 4 were measured using 1H-NMR, and the vinyl group content was calculated according to the following Equation 1.

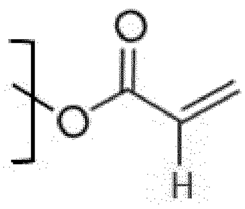

① Vinyl C-H (peak 6.38)

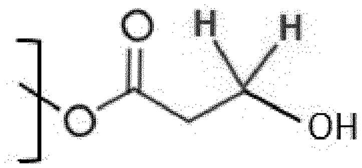

② Terminal Beta C-H (peak 3.86)

[Equation 1]

$$\text{Branched Terminal Vinyl Content (\%)} = \frac{①}{① + \frac{②}{2}} \times 100$$

wherein in Equation 1, ① is the C-H peak value of the vinyl group of Chemical Formula 5 at the branched terminal of the branched poly(3-hydroxypropionic acid) polymer, and ② is the terminal beta C-H peak value of Chemical Formula 4 at the branched terminal of the branched poly(3-hydroxypropionic acid) polymer.

**(3) Measurement of acid value (unit: meq/kg)**

A 0.02N potassium methoxide solution was titrated with a titrant solution, and a titration point of the polymer was analyzed. At this time, DGi 116-solvent electrode was used in Mettler Toledo T5 equipment.

[Table 1]

| | Branched terminal vinyl group content (%) | Mn | Mw | PDI | Acid value |
|---|---|---|---|---|---|
| Comparative Example 1 | 11 | 14288 | 27511 | 1.93 | 175 |
| Comparative Example 2 | 18 | 16628 | 32676 | 1.97 | 167 |

(continued)

| | Branched terminal vinyl group content (%) | Mn | Mw | PDI | Acid value |
|---|---|---|---|---|---|
| Comparative Example 3 | 0 | 2231 | 3799 | 1.70 | - |
| Example 1 | 16 | 11647 | 49798 | 4.27 | 84 |
| Example 2 | 24 | 16857 | 49035 | 2.91 | 56 |
| Example 3 | 28 | 22034 | 70204 | 3.19 | 67 |
| Example 4 | 20 | 18402 | 49088 | 2.67 | 90 |
| Example 5 | 26 | 14002 | 48800 | 3.48 | 135 |

As can be seen in Table 1, Examples 1 to 5 contain vinyl groups with a content of 5% or more in the branched terminals, and thus show the diversity of polymer structures, so that a branched poly(3-hydroxypropionic acid) polymer of an acrylic structure having a wide range of molecular weights and other thermal characteristics while maintaining its inherent physical characteristics can be prepared.

According to the Examples, during heat treatment, the polymer structure having the desired four or more branched structures is diversified through the formation of vinyl groups at the branched terminals and the crosslinking between the branches. If the polymer contains a large number of terminal groups, it is possible to impart ductility to the polymer material and has the effect of lowering Tm. The -OH functional group contained in the polymer is deactivated, thereby minimizing the problem of impurities remaining in the oligomer during copolymerization of polymers such as PLH.

In contrast, it was confirmed that the copolymers obtained in Comparative Examples 1 and 2 had relatively high acid values and relatively low weight average molecular weight and PDI values.

In addition, it was confirmed through NMR data that the copolymer obtained in Comparative Example 3 was obtained by reacting pentaerythritol with lactic acid, and therefore a vinyl group was not produced at the terminal.

**<Examples 6 to 12: Preparation of branched copolymer>**

**Example 6**

3-Hydroxypropionic acid(3HP) solution dissolved in water was placed in a round bottom flask (RBF), and pretreated at 80°C and 100 torr or less for 2 hours.

100 g of pretreated 3-hydroxypropionic acid(3HP) and 0.2 g of pentaerythritol as polyhydric alcohol was placed in a reactor, and subjected to a primary polymer polymerization using 300 mg of p-TSA (0.1 mol% relative to 3HP) as an acid catalyst at 80°C for 20 hours or more. During polymerization, the pressure inside the reactor was maintained at less than 5 torr.

The prepared acrylic primary polymer(P3HP) was melted at 100°C, then heated to 150°C, heat-treated under an acid catalyst of p-TSA 300mg (0.1 mol% relative to 3HP) for 2 hours to terminate a secondary polymerization reaction. Thereby, a branched polymer of Chemical Formula 1 having a vinyl group at the chain terminal was prepared (crude). The heat treatment was carried out at less than 5 torr.

**Example 7**

3-Hydroxypropionic acid(3HP) solution dissolved in water was placed in a round bottom flask (RBF), and pretreated at 90°C or less and 100 torr or less for 2 hours.

50 g of pretreated 3-hydroxypropionic acid(3HP) and 0.1 g of pentaerythritol as polyhydric alcohol was placed in a reactor, and subjected to a primary polymer polymerization using 300 mg of p-TSA (0.3 mol% relative to 3HP) as an acid catalyst at 85°C for 15 hours or more. During polymerization, the pressure inside the reactor was maintained at less than 10 torr.

The prepared acrylic primary polymer(P3HP) was melted at 100°C, then heated to 170°C, heat-treated under an acid catalyst of p-TSA 200mg (0.18 mol% relative to 3HP) for 10 hours or more to terminate a secondary polymerization reaction. Thereby, a branched polymer of Chemical Formula 1 having a vinyl group at the chain terminal was prepared. The heat treatment was carried out under normal pressure (crude).

**Example 8**

3-Hydroxypropionic acid(3HP) solution dissolved in water was placed in a round bottom flask(RBF), and

moisture was dried at 65°C and 70 torr for 2 hours and concentrated.

100 g of pretreated 3-hydroxypropionic acid(3HP) and 0.3 g of pentaerythritol as polyhydric alcohol was placed in a reactor, and subjected to a primary polymer polymerization using 400 mg of p-TSA (0.18 mol% relative to 3HP) as an acid catalyst at 95°C and under a pressure of less than 1 torr (0.6 torr) for 16 hours.

The prepared acrylic primary polymer(P3HP) was melted at 100°C, then heated to 140°C, heat-treated under a pressure of 0.6 torr and an acid catalyst of p-TSA 400 mg(0.18 mol% relative to 3HP) without stirring, and subjected to a secondary polymerization reaction for 5 hours. Thereby, a branched polymer of Chemical Formula 1 having a vinyl group at the chain terminal was prepared (crude).

## Example 9

A small amount (2 to 3 g) of the primary polymer(P3HP) polymerized in Example 8 was placed in a vial reactor, melted at 90°C, heated to 150°C, and heat-treated for 15 hours or more under a pressure of 0.9 torr and an acid catalyst of p-TSA 80 mg (0.18 mol% relative to 3HP) acid catalyst, so that the secondary polymerization reaction proceeds without stirring to prepare a branched polymer having a vinyl group at the chain terminal (crude).

## Example 10

3-Hydroxypropionic acid(3HP) solution dissolved in water was placed in a round bottom flask(RBF), and concentrated at 80°C and 60 torr for 2 hours.

55 g of concentrated 3-hydroxypropionic acid(3HP) and 0.2 g of pentaerythritol as polyhydric alcohol was placed in a reactor, and concentrated at 60 torr and 80°C using 210 mg of p-TSA (0.18 mol% relative to 3HP) as an acid catalyst. Then, primary polymer polymerization was carried out at the same temperature (80°C) and high vacuum pressure of 1 to 2 torr for 21 hours.

The prepared acrylic primary polymer(P3HP) was heated to 180°C under nitrogen atmosphere at normal pressure, and then heat-treated under acid catalyst of p-TSA 210 mg (0.18 mol% relative to 3HP) for 1 hour to terminate a secondary polymerization reaction. Thereby, a branched polymer of Chemical formula 1 having a vinyl group at the chain terminal was prepared (crude).

## Example 11

A branched polymer having vinyl groups at the chain terminals was prepared in the same manner as in Example 10, except that the primary polymer polymerization time was changed to 25 hours.

## Example 12

30 g of the branched polymer of Example 10 was dissolved in 300 mL of chloroform, and then 500 mL of ethanol was added at a slow rate to precipitate the polymer.

The precipitated polymer was filtered, and dried overnight in a vacuum oven (10 torr) at room temperature to prepare a purified branched polymer having vinyl groups at the chain terminals.

### <Experimental Example 2>

The characteristics of the polymers prepared in Examples 6 to 12 were evaluated as follows.

### (1) Evaluation of molecular weight by GPC (gel permeation chromatography)

For the polymers of each step prepared in the Examples and Comparative Examples, the molecular weight was evaluated using a Water e2695 model instrument and Agilent Plgel Mixed-C and B Columns. The sample was prepared at 4 mg/ml with chloroform as a solvent, and 20 ul was injected. The weight average molecular weight, number average molecular weight, and polydispersity index were measured by gel permeation chromatography (GPC, Tosoh ECO SEC Elite). The results are shown in Table 1 below.

Solvent: chloroform (eluent)
Flow rate: 1.0 ml/min
Column temperature: 40°C
Standard: Polystyrene (corrected with a cubic function)

(2) **Vinyl group content at branched terminals**

The C-H peak value(①) of the vinyl group of Chemical Formula 5 at the branched terminal of each polymer and the terminal beta C-H peak value(②) of Chemical Formula 4 were measured using 1H-NMR, and the vinyl group content was calculated according to the following Equation 1.

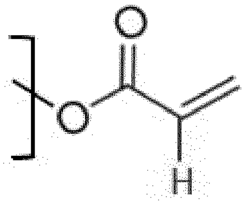

① Vinyl C-H (peak 6.38)

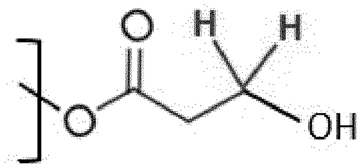

② Terminal Beta C-H (peak 3.86)

[Equation 1]

$$\text{Branched Terminal Vinyl Content (\%)} = \frac{①}{① + \frac{②}{2}} \times 100$$

wherein in Equation 1, ① is the C-H peak value of the vinyl group of Chemical Formula 5 at the branched terminal of the branched poly(3-hydroxypropionic acid) polymer, and ② is the terminal beta C-H peak value of Chemical Formula 4 at the branched terminal of the branched poly(3-hydroxypropionic acid) polymer.

**(3) Evaluation of thermal characteristics by DSC(differential scanning calorimetry)**

For the copolymers of respective steps prepared in the Examples and Comparative Examples, the thermal characteristics (Tg, Tm, Tcc (cold crystallization, 2nd heating result), Tc (1st cooling result)) were measured under nitrogen gas flow using TA DSC250 model equipment, and the results are shown in Table 2 below.

Each copolymer was heated/cooled at a rate of 10°C/min in the temperature range of -80°C to 150°C to perform thermal scanning.

In addition, the sample was cooled from 150°C to -80°C at 10°C/min (1st cooling)/maintained at -80°C for 10 minutes, and heated from -80°C to 150°C at 10°C /min (2nd heating).

[Table 2]

| Category | Branched terminal vinyl group content (%) | Evaluation of molecular weight characteristics | | | | Evaluation of thermal characteristics | | | |
|---|---|---|---|---|---|---|---|---|---|
| | | Mn | Mw | Mp | PDI | $T_c$(°C) /ΔH(J/g) | $T_g$(°C) | $T_{cc}$(°C) /ΔH(J/g) | $T_m$(°C) |
| Example 6 | 43 (crude, 2hr) | 10,400 | 18,800 | 15,300 | 1.8 | 32.6 /65.6 | -21.3 | N.D. | 56.3 |
| Example 7 | 100 (crude, 10hr) | 9,390 | 15,100 | 13,900 | 1.6 | 15.1 /1.0 | -20.1 | 34.3/7.0 | 59.6 |
| Example 8 | 58 (crude, 5 hr) | 7,760 | 13,200 | 6,660 | 1.7 | 7.9 /4.3 | -29.6 | 18.4/48.3 | 58.8 |
| Example 9 | 70 (crude, 15hr) | 7,620 | 11,400 | 5,000 | 1.5 | 8.2 /0.7 | -28.8. | N.D. | 56.9 |

(continued)

| Category | Branched terminal vinyl group content (%) | Evaluation of molecular weight characteristics | | | | Evaluation of thermal characteristics | | | |
|---|---|---|---|---|---|---|---|---|---|
| | | Mn | Mw | Mp | PDI | $T_c$(°C) /ΔH(J/g) | $T_g$(°C) | $T_{cc}$(°C) /ΔH(J/g) | $T_m$(°C) |
| Example 10 | 30 (crude, 25hr) | 18,000 | 32,900 | 28,700 | 1.8 | N.D. | -25.9 | N.D. | 57.3 |
| Example 11 | 52 (crude, 25hr) | 7,250 | 14,900 | 4,200 | 2.1 | 10.2 10.4 | -25.1 | 29.1/4.6 | 57.3 |
| Example 12 | 62 (purified) | 8,160 | 16,000 | 6,700 | 2.0 | 23.5 /30.9 | -23.2 | 18.1/22.9 | 66.4 |

As can be seen in Table 2, Examples 6 to 12 contain vinyl groups with a content of 5% or more in the branched terminal, showing the diversity of polymer structures, so that a branched poly(3-hydroxypropionic acid) polymer of an acrylic structure having a wide range of molecular weights and other thermal characteristics while maintaining its inherent physical characteristics can be prepared.

According to the Examples, during heat treatment, the polymer structure having the desired four or more branched structures is diversified through the formation of vinyl groups at branched terminals and the crosslinking between branches, and as a result, the Tg and Tm are lower than those of Comparative Examples due to the thermal characteristics.

In addition, generally, when the crystallization rate is fast, the enthalpy of Tc is large, cold crystallization is low or absent. As the degree of crystallization is higher, the enthalpy of Tm may be larger. Further, as the crystallinity is higher, the strength of the material is higher, but it is brittle and has no elasticity.

However, in Examples, the content of vinyl groups at the branched terminals can be adjusted in various ways to lower the Tm and lower the crystallinity of the branched structure, thereby reducing the brittleness characteristics.

## Claims

**1.** A branched poly(3-hydroxypropionic acid) polymer represented by the following Chemical Formula 1:

[Chemical Formula 1] $R\text{-}[A\text{-}(B)n\text{-}C]_k$

wherein in the Chemical Formula 1,
R is a tetravalent or higher-valent functional group derived from a polyfunctional monomer,
A is a direct bond or a linking group derived from an ether, sulfide, ester, thioester, ketone, sulfoxide, sulfone, sulfonate ester, amine, amide, imine, imide, or urethane,
B is a substituent represented by the following Chemical Formula 2 or Chemical Formula 3,

[Chemical Formula 2]

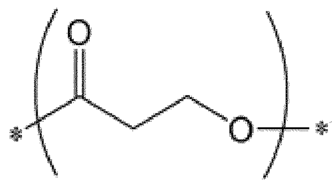

[Chemical Formula 3]

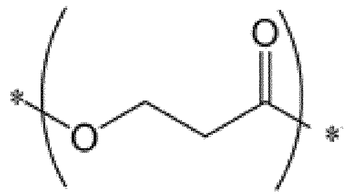

* is a moiety linked to A, k is an integer of 3 or more, n is an integer of 1 to 700, and
C is a substituent represented by the following Chemical Formula 4 or Chemical Formula 5,

[Chemical Formula 4]

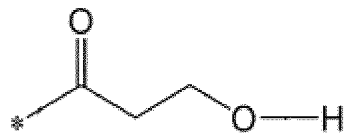

[Chemical Formula 5]

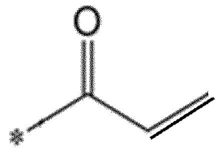

.

2. The branched poly(3-hydroxypropionic acid) polymer according to claim 1, wherein:
the branched poly(3-hydroxypropionic acid) polymer has an acid value of 150 meq/kg or less.

3. The branched poly(3-hydroxypropionic acid) polymer according to claim 1, wherein:

in the branched poly(3-hydroxypropionic acid) polymer,
a ratio of the number of the Chemical Formula 5 to the total of the number of the Chemical Formula 4 and the Chemical Formula 5 is 5% or more.

4. The branched poly(3-hydroxypropionic acid) polymer according to claim 1, wherein:
the polyfunctional monomer includes one or more selected from the group consisting of pentaerythritol, 4-arm-poly(ethyleneglycol)n=2~10, di(trimethylolpropane), di(pentaerythritol), tri(pentaerythritol), xylitol, sorbitol, inositol, cholic acid, β-cyclodextrin, tetrahydroxyperylene, pyridine-tetraamine(PTA), diethylenetriaminepentaacetic acid and tetraacetylene pentamine.

5. The branched poly(3-hydroxypropionic acid) polymer according to claim 1, wherein:
the branched poly(3-hydroxypropionic acid) polymer has a weight average molecular weight of 1,000 to 300,000.

6. The branched poly(3-hydroxypropionic acid) polymer according to claim 1, wherein:
the branched poly(3-hydroxypropionic acid) polymer has a number average molecular weight of 500 to 100,000.

7. The branched poly(3-hydroxypropionic acid) polymer according to claim 1, wherein:
the branched poly(3-hydroxypropionic acid) polymer has a polydispersity index of 1.00 to 13.0.

8. The branched poly(3-hydroxypropionic acid) polymer according to claim 1, wherein:

the branched poly(3-hydroxypropionic acid) polymer has a glass transition temperature(Tg) of -40°C to -10°C,

and
the branched poly(3-hydroxypropionic acid) polymer has a melting point of 40°C to 100°C.

**9.** The branched poly(3-hydroxypropionic acid) polymer according to claim 1, wherein:
the branched poly(3-hydroxypropionic acid) polymer contains 0.1 mol% to 25 mol% of the tetravalent or higher-valent functional group derived from the polyfunctional monomer relative to the repeating unit derived from 3-hydroxypropionic acid.

## INTERNATIONAL SEARCH REPORT

International application No. **PCT/KR2023/017495**

**A. CLASSIFICATION OF SUBJECT MATTER**

**C08G 63/06**(2006.01)i; **C08G 63/78**(2006.01)i; **C08G 63/87**(2006.01)i; **C08L 67/04**(2006.01)i; **C08G 63/82**(2006.01)i

According to International Patent Classification (IPC) or to both national classification and IPC

**B. FIELDS SEARCHED**

Minimum documentation searched (classification system followed by classification symbols)

C08G 63/06(2006.01); C08G 63/08(2006.01); C08G 63/12(2006.01); C08G 63/688(2006.01); C08G 63/91(2006.01); C08L 67/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, CAplus) & keywords: 분지형 폴리(3-하이드록시프로피온산)(branched poly-(3-hydroxypropionic acid)), 다관능성 화합물(multifunctional compound), 중합체(polymer)

**C. DOCUMENTS CONSIDERED TO BE RELEVANT**

| Category* | Citation of document, with indication, where appropriate, of the relevant passages | Relevant to claim No. |
|---|---|---|
| A | KR 10-2021-0038251 A (LG CHEM, LTD.) 07 April 2021 (2021-04-07)<br>See example 3; and figure 1. | 1-9 |
| A | ÇATIKER, E. et al. Direct synthesis of hyperbranched poly(acrylic acid-co-3-hydroxypropionate). International journal of polymer science. 2015, vol. 2015, article no. 231059, pp. 1-7.<br>See entire document. | 1-9 |
| A | ZHAO, L. et al. Development of a two-step process for production of 3-hydroxypropionic acid from glycerol using Klebsiella pneumoniae and Gluconobacter oxydans. Bioprocess and biosystems engineering. 2015, vol. 38, pp. 2487-2495.<br>See entire document. | 1-9 |
| A | KR 10-2014-0053098 A (BASF SE) 07 May 2014 (2014-05-07)<br>See entire document. | 1-9 |
| A | US 2021-0403639 A1 (AKINA, INC.) 30 December 2021 (2021-12-30)<br>See entire document. | 1-9 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **07 February 2024** | **07 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/017495**

| Patent document cited in search report | Publication date (day/month/year) | Patent family member(s) | Publication date (day/month/year) |
|---|---|---|---|
| KR 10-2021-0038251 A | 07 April 2021 | None | |
| KR 10-2014-0053098 A | 07 May 2014 | BR 112013031119 A2 | 06 December 2016 |
| | | CA 2836532 A1 | 20 December 2012 |
| | | CN 103608379 A | 26 February 2014 |
| | | CN 103608379 B | 05 August 2015 |
| | | EP 2721090 A1 | 23 April 2014 |
| | | EP 2721090 B1 | 09 September 2015 |
| | | ES 2555872 T3 | 11 January 2016 |
| | | JP 2014-518291 A | 28 July 2014 |
| | | JP 6038130 B2 | 07 December 2016 |
| | | MX 2013014810 A | 24 January 2014 |
| | | MX 341198 B | 11 August 2016 |
| | | RU 2014100963 A | 20 July 2015 |
| | | WO 2012-171998 A1 | 20 December 2012 |
| US 2021-0403639 A1 | 30 December 2021 | WO 2021-263272 A1 | 30 December 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220146011
- KR 1020220146014
- KR 1020230031735
- KR 1020230150442